# EUROPEAN PATENT SPECIFICATION

(11) **EP 2 980 689 B1**
(45) Date of publication and mention of the grant of the patent: **04.11.2020**
(21) Application number: 13879811.1
(22) Date of filing: 27.03.2013
(51) Int. Cl.: G06F 3/0481, H04L 29/08

(54) **PORTABLE INFORMATION TERMINAL**
TRAGBARES INFORMATIONSENDGERÄT
TERMINAL D'INFORMATIONS PORTATIF

(43) Date of publication of application: 03.02.2016
(73) Proprietor: Maxell, Ltd., Otokuni-gun, Kyoto 618-8525 (JP)
(72) Inventor: YOSHIZAWA, Kazuhiko, Osaka 567-8567 (JP); MASUOKA, Nobuo, Osaka 567-8567 (JP); HIRABAYASHI, Masayuki, Osaka 567-8567 (JP); NISHIJIMA, Hideo, Osaka 567-8567 (JP)
(74) Representative: Mewburn Ellis LLP
(86) International application number: PCT/JP2013/058904
(87) International publication number: WO 2014/155549

(56) References cited:
- WO-A1-2010/116652
- JP-A- 2008 118 346
- JP-A- 2011 066 850
- JP-A- 2012 203 537
- US-A1- 2010 146 442
- US-A1- 2011 191 611

## Description

### TECHNICAL FIELD

The present invention relates to a portable information terminal application software recommendation technology and image display control technology.

### BACKGROUND ART

Advances in performances and multifunctionalities of portable information terminals, such as mobile/cellular telephones, smartphones, tablet terminals and so forth, are remarkable. Useful applications software (referred to as "app" hereinafter) are also becoming furnished in large numbers, and it is the common practice to store various types of apps in a built-in storage of portable information terminal and selectively use such apps depending on the situation.

In the case of executing an app on the aforesaid portable information terminal, a hierarchized menu may be used to select a desired app therefrom and activate it. Alternatively, while preliminarily disposing icons which are correlated with respective apps (or data created by respective apps) on a display screen, one of such icons is selected to run a desired app. With this approach, the usability is further improved. Especially, smartphones and tablet terminals or the like are relatively larger in display area (wide display screen) than traditional cellular phones; so, it becomes possible to dispose an increased number of icons on the display screen.

However, when the number of icons further increases, it is no longer guaranteed that those icons correlated with often-used apps are constantly displayed on the display screen in an easy-to-select state. This causes a decrease in usability of the portable information terminal in icon selection events. As one scheme for avoiding such usability degradation, there is a technique disclosed, for example, in Patent Literature 1 presented below.

The technique taught by Patent Literature 1 given below is a technique which "(ADVANTAGEOUS EFFECTS OF INVENTION) stores in advance a usage history indicating a use frequency of application software, obtains based thereon the rank order of application software high in use frequency, obtains a display layout of icons corresponding to the rank-ordered application software, and displays the icons in accordance with the display layout in response to a request from the user".

Patent Literature 2 discloses a mobile communication terminal configured to run a plurality of application programs. The terminal has a first memory which stores a history of access of the programs and a second memory which stores an arrangement of icons corresponding to the application programs. The arrangement of the icons displayed by the terminal is updated in the second memory based on the history of use of the programs stored in the first memory. The application software for each application program is stored on the terminal, and is not downloaded from an external server.

Similarly, Patent Literature 3 also discloses a mobile communication terminal which judges the icons corresponding to application software, to be displayed in an ordered menu to the user. The order of the icons displayed to the user is dynamically updated based on their utilization history, which takes into account the frequency of icon use depending on the location of the device and the time period in which the device is accessed.

Patent Literature 4 teaches of a plurality of mobile communication terminals in communication with an external aggregation server. The external server carries out recommendation processes and then transmits icon information of a recommended application to each mobile terminal. The mobile terminals then receive the icon information and display the icon corresponding to the recommended application.

### CITATION LIST

### PATENT LITERATURE

Patent Literature 1: JP-A-2011-159077
Patent Literature 2: US 2011/0191611-A1
Patent Literature 3: JP-A-2008-118346
Patent Literature 4: JP-A-2012-203537
Patent Literature 5: US2010/0146442 A1 discloses information processing apparatus and information processing method.

### SUMMARY OF INVENTION

The invention is defined by a portable terminal device according to claim 1. Further embodiments are set out in the dependent claims.

### TECHNICAL PROBLEM

The above-stated Patent Literature 1 discloses that it is possible by the technique to change the icon display layout in accordance with the use frequency, thus making it possible to provide a portable information terminal which is less in operation stress. However, the use frequency of each app is not always constant; it differs depending on a place and time zone of use of the portable information terminal. For example, an often-used app must be different between in-company and out-of-company environments. In addition, apps that are frequently used in private hour would be different from apps frequently used in working hour and also from those in private hour after a work-finishing time.

That is to say, it is considered to become possible to provide a portable information terminal with more preferable usability by estimating and recommending an app which seems to be willingly used by the user in consideration of the portable information terminal-using place and time zone and then performing screen display control in such a way as to make it easier for the user to select the app recommended. However, Patent Literature 1 does not disclose any technique for realizing such portable information terminal.

Also note that smartphones and tablet terminals or else are typically arranged to enable the layout of icons being displayed on the display screen to be resequenced by the user according to his or her preference. Therefore, in cases where the portable information terminal has the function of automatically changing the layout of the icons also, sufficient consideration should be given to the user's favorite icon layout.

An object of the present invention is to provide, by taking the above stated problem into consideration, a portable information terminal having an application software recommendation method, which is capable of providing preferred usability.

### SOLUTION TO PROBLEM

The foregoing object is achievable by providing a portable information terminal having application software recommendation function, comprising the features according to claim 1.

### ADVANTAGEOUS EFFECTS OF INVENTION

By using the present invention according to claim 1, it is possible to provide a portable information terminal having an application software recommendation capable of providing the user with preferred usability.

### BRIEF DESCRIPTION OF DRAWINGS

[Fig. 1] A block diagram of a portable information terminal in accordance with an embodiment.
[Fig. 2] A configuration diagram of a communications system including the portable information terminal in accordance with an embodiment.
[Fig. 3] A flowchart for explanation of application recommendation processing in accordance with an embodiment.
[Fig. 4] A screen display diagram for explanation of a basic screen layout in accordance with an embodiment.
[Fig. 5] A screen display diagram for explanation of a screen layout which makes it easier to select a recommended app in accordance with an embodiment.
[Fig. 6] A conceptual diagram for explanation of an area which allows displaying of a recommended app in accordance with an embodiment.
[Fig. 7] A conceptual diagram for explanation of an area which allows displaying of a recommended app in accordance with an embodiment.
[Fig. 8] A conceptual diagram for explanation of a screen layout which makes it easier to select a recommended app in accordance with an embodiment.
[Fig. 9] A conceptual diagram for explanation of an area which allows displaying of a recommended app in accordance with an embodiment.
[Fig. 10] A block diagram of an application server in accordance with an embodiment.
[Fig. 11] A flowchart for explanation of application recommendation processing in accordance with an embodiment.

### DESCRIPTION OF EMBODIMENTS

Embodiments of the present invention will be described using the accompanying drawings below.

### EMBODIMENT 1

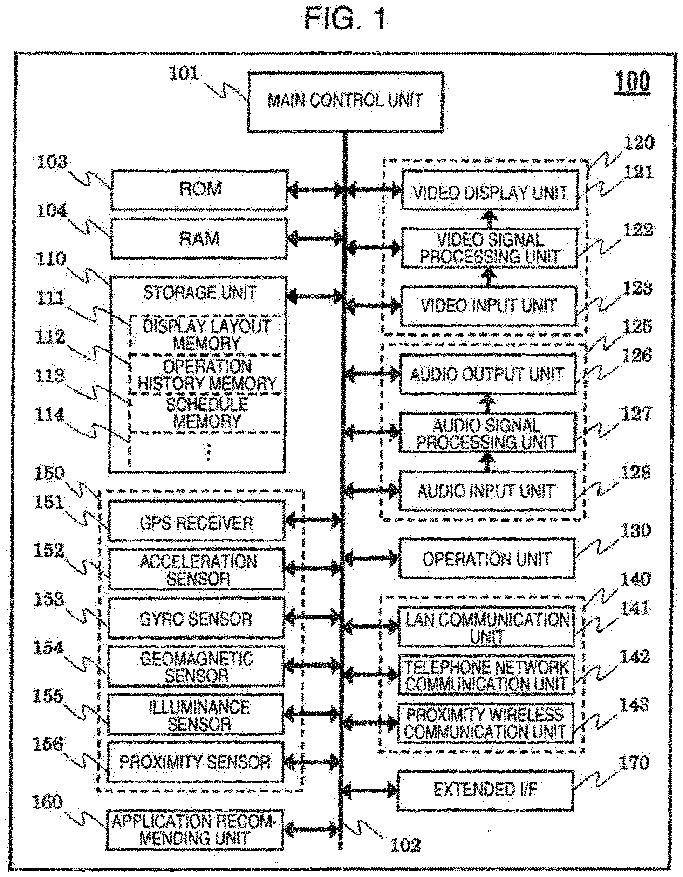

Fig. 1 is a block diagram of a portable information terminal of this embodiment. The portable information terminal 100 is configured from a main control unit 101, system bus 102, read-only memory (ROM) 103, random access memory (RAM) 104, storage unit 110, video processing unit 120, audio processing unit 125, operation unit 130, communication processing unit 140, sensor unit 150, application recommending unit 160, and extended interface unit 170.

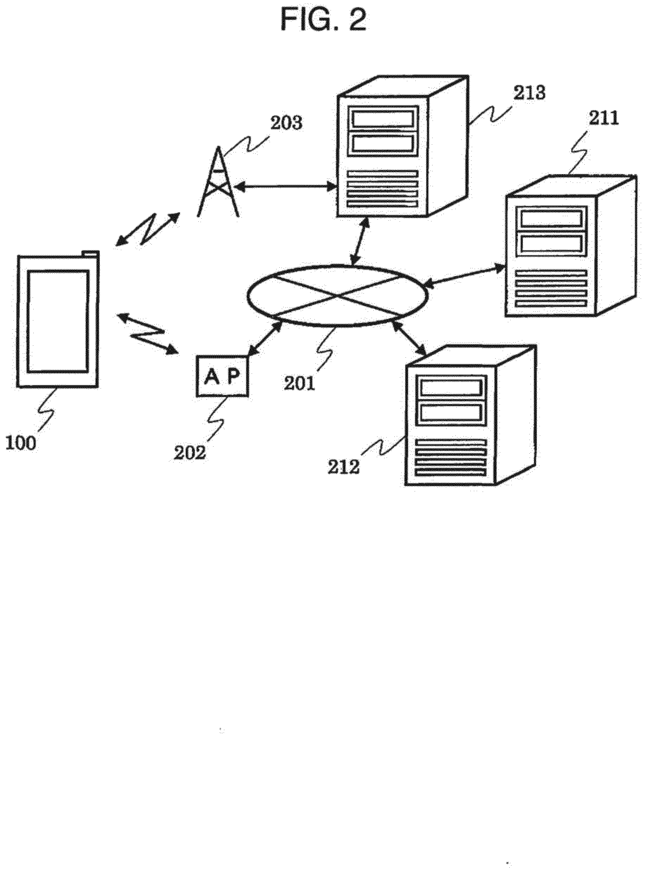

Fig. 2 is a configuration diagram of a communications system including the portable information terminal 100 of this embodiment. The communications system is generally made up of portable information terminal 100, wide-area public network 201, access point 202 for the wireless/radio communication use, base station 203 of mobile/cellular telephone communication network, application server 211, internet mail server 212, and mobile telephone communication server 213.

The portable information terminal 100 may be a mobile phone, smartphone, tablet terminal or the like, or alternatively, may be a personal digital assistant (PDA) or a personal computer (PC) of the notebook type. Still alternatively, it may be a music player, digital camera, handheld game console with communication functionality or other mobile digital equipment.

The main control unit 101 is a microprocessor unit which controls an entirety of the portable information terminal 100 in accordance with a prespecified program. The system bus 102 is a data communication path for performing data transmission/reception between the main control unit 101 and respective units within portable information terminal 100. ROM 103 is a memory in which are stored basic operation programs of portable information terminal 100, such as an operating system, predetermined application software, etc. Examples of it are rewritable ROMs, such as an electrically erasable programmable ROM (EEPROM), flash ROM and the like. By updating the programs stored in ROM 103, the basic operation programs are upgradable and function-enhanceable. Note that ROM 103 may be arranged not to use the independent configuration shown in Fig. 1 but to use a partial storage region within the storage unit 110. RAM 104 serves as a work area in the event of executing the basic operation program or various types of applications software. Optionally, ROM 103 and RAM 104 may have an integral configuration with main control unit 101.

The storage unit 110 is used to store respective operation setup values, information of a user of portable information terminal 100, and various types of applications software running on portable information terminal 100. The storage unit 110 is constituted from a display layout memory region 111 for storing information concerning layout situations of icons on display screen which are correlated with respective apps (or data created by respective apps) and also concerning other screen layouts, an operation history memory region 112 for storing an operation history of the user of portable information terminal 100 with respect to portable information terminal 100, a schedule memory region 113 for storing an action schedule or "to-do list" of the user of portable information terminal 100, which was inputted by the user of portable information terminal 100, and an other-information memory region 114 for storing other general information. Additionally, the aforesaid respective memory regions are not specifically required to be fixed in position within storage unit 110.

The storage unit 110 needs to retain the stored information even in the situation that electrical power is not supplied to portable information terminal 100. Accordingly, a device such as a flash ROM, solid-state drive (SSD), hard disc drive (HDD) or the like is used for example.

A partial region of the other-information memory region 114 may be used to substitute an entirety or part of the functionality of ROM 103. Also, the portable information terminal 100 is function-enhanceable by downloading new application software from the application server 211 via the Internet 201 and wireless communication-use access point 202 or base station 203 of the mobile telephone communication network. In this event, the new application software downloaded may be stored in other-information memory region 114. By letting the new application software stored in other-information memory region 114 be executed after having been expanded on RAM 104, the portable information terminal 100 is able to realize a variety of new functions.

The video processing unit 120 is configured from a video display unit 121, video signal processing unit 122, and video input unit 123. The video display unit 121 is, for example, a display device such as a liquid crystal panel, which provides the user of portable information terminal 100 with a video/image signal processed by video signal processing unit 122. Video signal processing unit 122 has a video RAM, not shown in the drawing, for actualizing screen display by inputting video data to the video RAM. Video signal processing unit 122 also functions to perform format conversion and superposition processing of menus and on-screen display (OSD) signals when the need arises. The video input unit 123 is a camera which inputs image data of a target object and its surroundings by conversion of the light entered from a lens to an electrical signal.

The audio processing unit 125 is made up of an audio output unit 126, audio signal processing unit 127, and audio input unit 128. The audio output unit 126 is a loudspeaker, which provides the user of portable information terminal 100 with an audio signal processed by audio signal processing unit 127. Audio input unit 128 is a microphone, which inputs the user's voice and other sounds by conversion to audio data.

The operation unit 130 is an instruction input section which operates to input an operation instruction(s) to portable information terminal 100, which unit is constituted in this embodiment from a touch panel disposed and laminated on the video display unit 121 and an operation key module with an array of button switches. Only one of them may be equipped. A keyboard or like instrument which is connected to the extended interface unit 170 to be later described may be used to perform operations of the portable information terminal 100. The above-stated touch panel function may alternatively be the one that is built in video display unit 121 per se.

The communication processing unit 140 is configured from LAN communication unit 141, mobile telephone network communication unit 142, and proximity wireless communication unit 143. LAN communication unit 141 performs transmission and reception of data while establishing interconnection with the wireless communication-use access point 202 of the Internet 201 by wireless/radio communication. Mobile telephone network communication unit 142 performs telephone communications (voice calls) and data transmission/reception by radio communication with base station 203 of the mobile telephone network. Proximity wireless communication unit 143 performs wireless communications when it comes close to a corresponding reader/writer. Each of the LAN communication unit 141, mobile telephone network communication unit 142 and proximity wireless communication unit 143 is arranged to have a coding circuit, decoding circuit, antenna and others.

The sensor unit 150 is a group of sensors for detecting a present state of portable information terminal 100; in this embodiment, it is constituted from a global positioning system (GPS) reception unit 151, acceleration sensor 152, gyro sensor 153, geomagnetic sensor 154, illuminance sensor 155, and proximity sensor 156. With this sensor group, it becomes possible to detect the portable information terminal 100's position, movement, inclination, direction and ambient brightness. It may further comprise other sensors.

The application recommending unit 160 performs application recommendation processing for estimating an app which seems to be willingly used by the user of portable information terminal 100 from the information concerning a present location of portable information terminal 100 and information concerning a present time or other information items, and recommend it. Details of the application recommendation processing will be described later. Note that the same function may also be realized not by using the independent configuration shown in Fig. 1 but by permitting the main control unit 101 to execute prespecified application software while letting the RAM 104 serve as a work area therefor.

The extended interface unit 170 is a group of interfaces for extending the function of portable information terminal 100; in this embodiment, it is configured from a video/audio interface, universal serial bus (USB) interface, memory interface and so forth. The video/audio interface performs inputting of video and audio signals from external video/audio equipment and outputting of video/audio signals to the external video/audio equipment. The USB interface performs connection of USB equipment, such as a keyboard and other devices. The memory interface performs data transmission/reception with a memory card being connected thereto.

It is noted that although the configuration example of portable information terminal 100 shown in Fig. 1 includes many constituent elements not essential to this embodiment, such as the proximity wireless communication unit 143, illuminance sensor 155, proximity sensor 156 and the like, configurations having none of them are also employable without spoiling the effects of this embodiment. One or more elements may be further added, which are not shown in the drawings, such as digital television broadcasting reception function, electronic money payment function, etc.

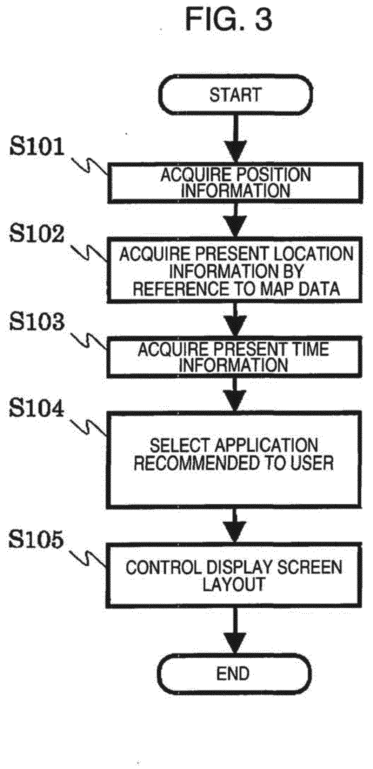

An explanation will be given below, using a flowchart of Fig. 3, of the application recommendation processing and screen display processing to be performed by the portable information terminal 100 of this embodiment.

In the portable information terminal 100 of this embodiment, first of all, the GPS reception unit 151 receives an electric wave from GPS satellite in response to an application recommendation processing execution command issued by the main control unit 101, thereby acquiring position information (at step S101). Next, main control unit 101 uses the position information acquired by the processing at step S101 to obtain present location information by reference to map data (S102). Main control unit 101 further obtains present time information (S103).

Note that the map data may be the one that has been prestored by portable information terminal 100 in other-information memory region 114 or, alternatively, may be the one that is stored in a map data server, not shown in the drawings. In the case of the map data being stored in the map data server, the processing of S102 may be modified so that the main control unit 101 sends the position information acquired by the processing of S101 to the map data server through LAN communication unit 141 (or mobile telephone network communication unit 142) and Internet 201, thereby acquiring the present location information.

Also note that the processing at S103 for acquiring present time information may be performed by reference to the built-in clock function of main control unit 101. Alternatively, it may be done by communication with a time server, not illustrated, via LAN communication unit 141 (or mobile telephone network communication unit 142) and Internet 201.

After the main control unit 101 acquired the present location information and present time information by the processing of S102 and S103, the application recommending unit 160 next operates to timely refer to the present location information and the present time information or else, thereby performing application recommendation processing for estimating an app which seems to be willingly used by the user of portable information terminal 100 and for recommending it (S104).

Note here that the aforesaid application recommendation processing may be performed by reference to only the present location information acquired at S102 or, alternatively, may be done by reference to only the present time information obtained at S103. Although not specifically shown in the flowchart of Fig. 3, the same may alternatively be performed by reference to a history of operations of the user of portable information terminal 100 with respect to portable information terminal 100, which history is stored in the operation history memory region 112, in addition to the present location information and the present time information. Still alternatively, it may be done by reference to an action schedule which was inputted by the user of portable information terminal 100 and which is stored in the schedule memory region 113. An output of each sensor group equipped in portable information terminal 100 may further be referred to.

Regarding the application recommendation processing, an explanation will be given by taking examples.

As an example, in cases where the present location information acquired at S102 almost coincides with the location of a certain station of a so-and-so railroad company, there may be recommended an app which displays a timetable of the certain station, an app for transfer guidance or an app which displays a map of railway network including the so-and-so railroad company. In case the present location information acquired at S102 almost coincides with the location of a so-and-so theme park, there may be recommended an app which displays an in-park map of the so-and-so theme park or an app for showing a standby time and/or congestion degree of each attraction of the theme park. In case the present location information acquired at S102 almost coincides with the location of a company in which the user of portable information terminal 100 serves and which was previously registered by the user of portable information terminal 100, an office-use app may be recommended, such as a scheduler app, spreadsheet app, translation app, etc. In case it is judged from the present location information acquired at S102 that portable information terminal 100 is in a land vehicle traveling on an expressway, there may be recommended an app which displays traffic information, an app which displays an expressway route map or the like.

As another example, in cases where the present location information acquired at S102 almost coincides with the location of a certain station of so-and-so railroad company, an app may be further recommended depending on the present time information acquired at S103 in a way which follows: a gourmet-preferred app which introduces eating and drinking establishments near the certain station is recommended when the present time information indicates a generally accepted mealtime zone; if other time zones, an app for displaying the timetable is recommended. In case the present location information acquired at S102 almost coincides with the location of a so-and-so theme park, an app may be further recommended depending on the present time information acquired at S103 in a way which follows: if the present time information is near the closing time of the so-and-so theme park, either an app which displays expressway congestion information or an app which displays the timetable of a station nearest to the so-and-so theme park is recommended; if other time zones, the an app which displays the in-park map is recommended.

In case the present location information acquired at S102 almost coincides with the location of the company in which the user of portable information terminal 100 serves, an app may be further recommended depending on the present time information acquired at S103 in a way which follows: if the present time information is an average clock-out time zone of the user of portable information terminal 100, an app is recommended which displays the timetable of a station nearest to such company; if in other time zones then recommend the office-use app stated supra. Note here that the information of the average clock-out time zone of the user of portable information terminal 100 may be handled, for example, by a process having the steps of storing in advance a history of the present location information or present time information of portable information terminal 100 in the operation history memory region 112, calculating an average time point of movement of portable information terminal 100 from the location of the company to another location from the history of the position information or present location information, and treating such calculated time point as the average clock-out time of the user of portable information terminal 100. The user of portable information terminal 100 may take action to register in advance the clock-out time to the schedule memory region 113 or else.

In the case where it is determined from the present location information acquired at S102 that the portable information terminal 100 is now on an expressway, an app may be additionally recommended by further reference to an output of the acceleration sensor 152 or else in a case-sensitive way which follows: when the portable information terminal 100 is determined to be traveling on the expressway at a predetermined speed or higher speeds, either an app which displays an expected time of arrival at a destination that has been registered by the user of portable information terminal 100 or an app which displays sightseeing guidance information on the destination is recommended; when portable information terminal 100 is judged to be moving on the expressway at speeds less than or equal to a predetermined level or is stopping thereon, an app is recommended which displays road information including, but not limited to, accident information and congestion information.

Additionally, an app may also be recommended which displays a route map leading to the travel destination of the user of portable information terminal 100 by reference to the action schedule inputted by the user of portable information terminal 100 and stored in the schedule memory region 113, by way of example. An app that displays a guide map of the travel destination may alternatively be recommended.

Note here that the app to be recommended by the application recommendation processing should not be limited to a single one; a plurality of apps may be recommended. Conversely, in cases where the application recommending unit 160 judges that any app which seem to be willingly used by the user of portable information terminal 100 is not found even after having referred to the present location information and present time information or other information, the app recommendation may not be performed.

Additionally, in case the app that was judged in the processing of S104 to seem to be willingly used by the user of portable information terminal 100 has already been stored in the storage unit 110 or else of portable information terminal 100, such app may be recommended, with no post-processing, as the app that seems to be willingly used by the user of portable information terminal 100. In case the app that was judged to seem to be willingly used by the user of portable information terminal 100 is not stored in the storage unit 110 or else of portable information terminal 100 and is an app stored in the application server 211, software for installing such app may be recommended as the app that seems to be willingly used by the user of portable information terminal 100. Alternatively, browser software which is linked to a web page for introducing the above-noted app may be recommended as the app that seems to be willingly used by the user of portable information terminal 100.

In the flowchart shown in Fig. 3, in cases where an app which should be recommended to the user of portable information terminal 100 is found as a result of execution of the application recommendation processing at S104, the main control unit 101 next performs screen display control processing for controlling the layout of a display area of display unit 121 (at S105). In this embodiment, the screen display control processing includes the steps of first letting the main control unit 101 check the app recommended by the application recommendation processing at S104, and performing processing for updating video data being inputted to the video RAM within video signal processing unit 122 in accordance with the check result.

In a standby state during normal operation, video data of the layout of a basic screen of portable information terminal 100 which is stored in the display layout memory region 111 is being inputted to the video RAM. On the other hand, after having performed the application recommendation processing of this embodiment, the main control unit 101 inputs, by the screen display control processing responsive to the result of the application recommendation processing, video data of a screen layout to the video RAM, which layout assists the user of portable information terminal 100 to easily select the app that was recommended by the application recommendation processing of S104. By such processing, the display screen that makes it easier to select the recommended app is presented to the user of portable information terminal 100. Needless to say, in the case where any one of various apps stored in portable information terminal 100 is selected and executed, the video data of an execution screen of such app is inputted to the video RAM.

Examples of the above-stated basic screen layout of portable information terminal 100 and the screen layout which permits the user of portable information terminal 100 to easily select the app that was recommended by the application recommendation processing will be explained using some of the accompanying drawings below.

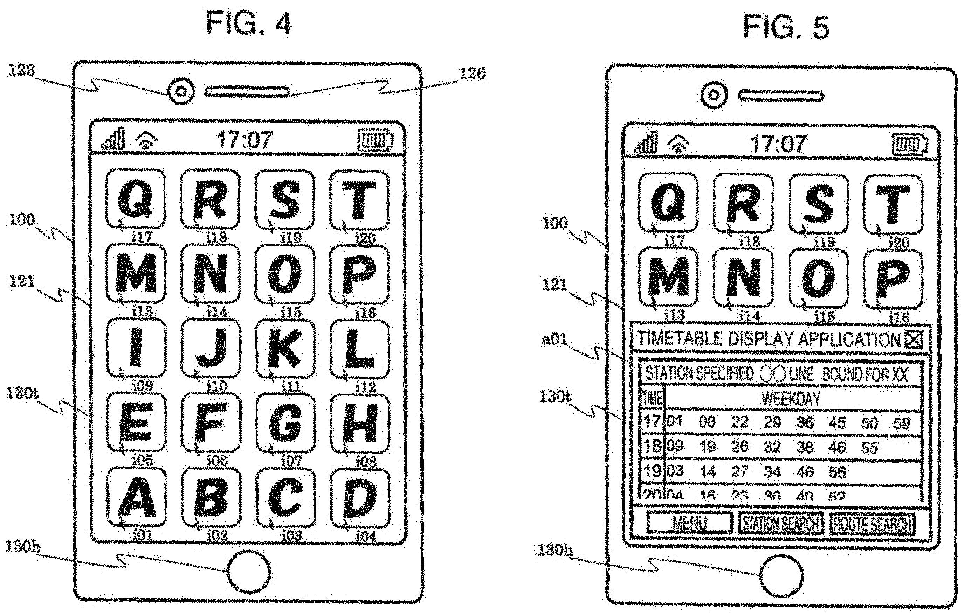

Fig. 4 is a screen display diagram showing one example of the basic screen layout in the standby state of portable information terminal 100 of this embodiment. In this drawing, those having the same reference numerals as Fig. 1 are the same in configuration/operation of Fig. 1, the explanation of which will be omitted herein. Additionally, a touch panel 130t and home key 130h are constituent elements of operation unit 130, respectively: in particular, the home key 130h is the one that has the function of quitting a running app and displaying the basic screen when depressed during execution of various types of apps.

In addition, icons i01 to i20 are those correlated with various apps (or data created by respective apps) being stored in portable information terminal 100 respectively: these are displayed within the display area of display unit 121. Selecting one of such icons makes it possible to activate an app correlated therewith (or app used to create the data correlated with the icon). Also, in this embodiment, the icon selection is done by performing an operation such as tapping or double-tapping at a part on the tough panel 130t, at which the icon is being displayed.

The icons i01-i20 are designed to enable the user of portable information terminal 100 to perform voluntarily the layout position change and display/non-display changeover. In case the basic screen layout is changed, such as a change of the layout of icons i01-i20, display/nondisplay changeover or the like, the storage content of display layout memory region 111 is updated accordingly.

Turning to Fig. 5, this is a screen display diagram showing one example of the screen layout of the display screen of portable information terminal 100 in the event that the screen display control processing is performed by main control unit 101 in such a way as to assist the user of portable information terminal 100 to easily select the app that was recommended by the application recommendation processing. Note that in this drawing, an example is shown in the case where an app for displaying a timetable of a certain station of so-and-so railroad company is recommended by the application recommendation processing based on the present location information of portable information terminal 100. The portable information terminal 100 of this embodiment is arranged to perform automatic execution of the app that was recommended by the application recommendation processing (timetable-displaying app) to thereby display an execution screen a01 of such recommended app at a lower part of the display area of display unit 121.

More specifically, with the portable information terminal 100 of this embodiment, it becomes possible to promptly present to the user of portable information terminal 100 an execution result of the app that seems to be willingly used by the user of portable information terminal 100 as has been recommended based on the present location information and other information. In case the user of portable information terminal 100 wants to ascertain in further detail the execution result of the recommended app, all the user needs to do is to perform an operation of tapping or double-tapping with respect to the part on touch panel 130t which is displaying the execution screen (a01 in the example of Fig. 5) of the recommended app. By this operation, the screen layout is to be modified in such a manner that the execution result of the recommended app is displayed entirely on the display area of display unit 121.

As has been stated above, the portable information terminal 100 of this embodiment makes it possible by execution of a series of processing tasks shown in the flowchart of Fig. 3 to promptly present to the user of portable information terminal 100 the execution result of the app that seems to be willingly used by the user of portable information terminal 100. In other words, it becomes possible for the portable information terminal 100 of this embodiment to provide preferred usability to the user.

Note here that as shown in Fig. 5, in the state that the execution screen a01 of the app which was recommended by the application recommendation processing is displayed at lower part of the display area of display unit 121, when the user of portable information terminal 100 does not need to display the execution screen a01 of such recommended app, it is possible by depressing the home key 130h to cause the inside of the display area of display unit 121 to go back to the basic screen layout. Alternative setup may be employed, which causes the inside of display area of display unit 121 to return to the basic screen layout by performing on the tough panel 130t a flick operation in either right or left direction on the execution screen a01 of the recommended app.

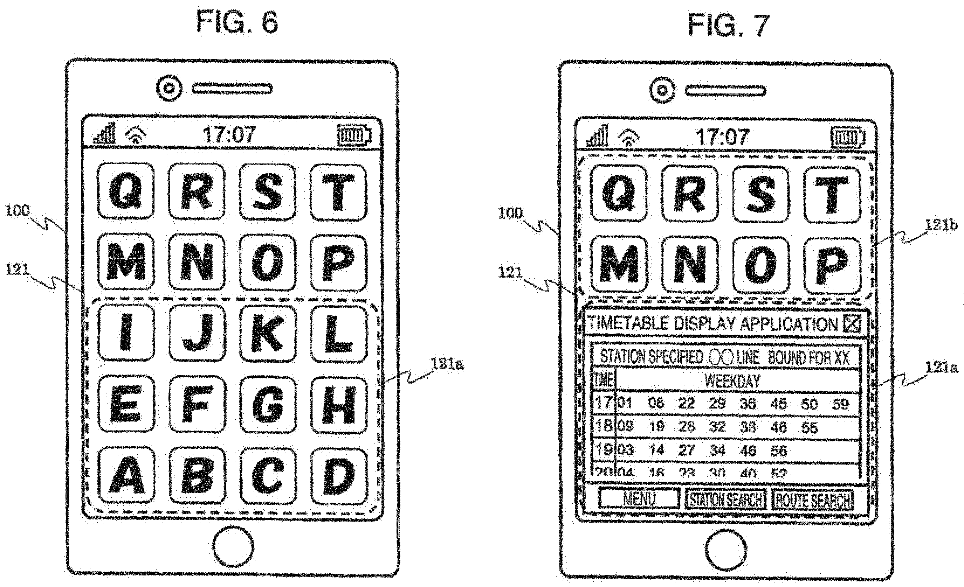

Also in the portable information terminal 100 of this embodiment, as shown in Fig. 6, a display area 121a is predefined within the display area of display unit 121, which permits visual display of an execution screen of the app that was recommended by the screen display control processing. Furthermore, in the event of displaying the execution screen of the app recommended by such screen display control processing, the execution screen of the app recommended by the screen display control processing is arranged to be displayed only within the display area 121a as shown in Fig. 7. With this arrangement, it becomes possible for the user of portable information terminal 100 to quickly select any desired one of the icons displayed in a display area 121b (i.e., icons i13 to i20 of Fig. 5) even when he or she does not need the visual indication of the execution screen of the recommended app which is displayed in the display area 121a.

Therefore, by letting the user of portable information terminal 100 dispose in advance those icons correlated with the apps (or data created by respective apps) of high use frequency which are suited for his or her own preference, it becomes possible for portable information terminal 100 to simultaneously display on the screen the execution screen of the app recommended by the screen display control processing and the icons correlated with the high use-frequency apps (or data created by respective apps) and present them to the user of portable information terminal 100. Thus, the portable information terminal 100 of this embodiment is able to provide further increased usability to the user.

Note here that the execution screen a01 of the recommended app may be the one that is the same as an execution screen which is obtained by the portable information terminal user's selection/execution of any one of the icons i13-i20 correlated with the high use-frequency icons suited for his or her preference (or the data created by respective data).

Additionally, the size and position of the display area 121a within the display area of display unit 121 may be freely determined on a case-by-case basis and may also be set up by the user of portable information terminal 100. The size of display area 121a may vary in accordance with the kind of an app recommended by the screen display control processing or, alternatively, kept constant regardless of the kind of such recommended app.

Conceivable examples of the timing that the main control unit 101 issues an application recommendation processing execution command include, but not limited to, an instant that the portable information terminal 100 changes from its power-off state to power-on state, an instant that its sleep state is released, and an instant that the home key 130h or a given predefined operation key is depressed. Another approach is to prepare on the display unit 121 an icon for executing the application recommendation processing and perform it at the timing that such icon is selected and executed. It may be done at other timings, such as doing in accordance with a predefined schedule.

### EMBODIMENT 2

An explanation will be given below in regard to an embodiment 2 of this invention. A configuration and advantageous effects in this embodiment are to be the same as those of embodiment 1 unless otherwise noted. Consequently, only different points between this embodiment and embodiment 1 will mainly be set forth below, and an explanation about common points will be omitted as much as possible in order to avoid duplication.

In a portable information terminal 100 of this embodiment also, its application recommendation processing is performed in the same way as embodiment 1 stated supra. Note however that in this embodiment, an explanation will be given of an embodiment which is deemed preferable in cases where two or more apps are recommended by the application recommendation processing.

In the flowchart shown in Fig. 3, in a case where a plurality of apps to be recommended to the user of portable information terminal 100 are found as a result of execution of the application recommendation processing at S104, the main control unit 101 performs screen display control processing for controlling the layout of display area of display unit 121 in the process step S105 in the same way as embodiment 1 stated above. In this regard, however, the application recommendation processing of this embodiment is specifically arranged to perform, as the screen display control processing for displaying in such a way as to assist the user of portable information terminal 100 to easily select any one of the plurality of apps recommended by the application recommendation processing, processing for displaying icons i21 to i23 at lower part of the display area of display unit 121, which icons are correlated with respective ones of the plurality of recommended apps.

In the portable information terminal 100 of this embodiment, in a case where the user of portable information terminal 100 ascertains an execution result(s) of the app(s) recommended by the screen display control processing, the user performs a manual operation such as tapping or double-tapping with respect to a part on the touch panel 130t at which the icons i21-i23 are being displayed, thereby selecting and executing any one of the recommended apps.

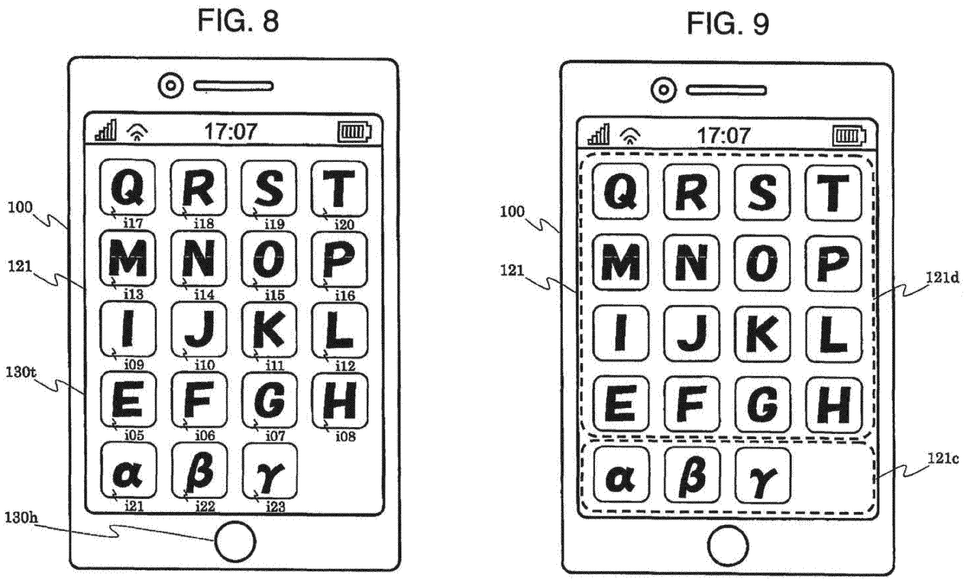

Note here that icon images are usually smaller in display area than execution screen images of apps; thus, it becomes possible by displaying the apps recommended by the application recommendation processing in the display area of display unit 121 in the form of icons to simultaneously present the plurality of recommended apps to the user of portable information terminal 100 as shown in Fig. 8. Therefore, in the portable information terminal 100 of this embodiment, it becomes possible as shown in Fig. 9 to reduce the size of a display area 121c which is defined in the display area of display unit 121 for permitting visual indication of those icons correlated with the apps recommended by the application recommendation processing to the extent that it is smaller than the display area 121a in the case of embodiment 1. Namely, this means that the portable information terminal 100 of this embodiment has a merit of enabling an increased number of icons correlated with high use-frequency apps (or data created by respective apps) disposed by the user of portable information terminal 100 according to his or her own preference to be displayed in a display area 121d even where the icons correlated with the apps recommended by the application recommendation processing are presented to the user of portable information terminal 100.

Alternatively, the display area 121d may be further divided into two areas, one of which is used to display icons correlated with the high use-frequency apps (or data created by respective apps) disposed by the user of portable information terminal 100 according to his or her preference, and the other of which is for displaying icons which have been changed in their layout positions in accordance with known use frequencies.

As has been stated above, in the portable information terminal 100 of this embodiment also, it becomes possible by performing the application recommendation processing and the screen display control processing to simultaneously display the icons correlated with the apps which were recommended based on present location information and other information and which seem to be willingly used by the user of portable information terminal 100 and the icons correlated with high use-frequency apps (or data created by respective apps) disposed by the user of portable information terminal 100 according to his or her preference. Further, by letting the user of portable information terminal 100 selectively execute the icons, it is possible to ascertain execution results of the apps recommended by the application recommendation processing. In short, with the portable information terminal 100 of this embodiment also, it becomes possible to provide preferred usability to the user.

Note that the icons i21-i23 correlated with respective ones of the plurality of recommended apps may be the same as some of the icons i05-i20 correlated with the high use-frequency apps (or data created by respective apps) specified by the user of portable information terminal 100 according to his or her preference. In case the apps recommended by the application recommending unit 160 are the same as some of the apps with which the icons being disposed in display part 121d are correlated, these may be prevented from being displayed in display part 121c in order to avoid duplicated visual indication.

Also note that the size and position of the display area 121c within the display area of display unit 121 may be freely determinable and may also be set by the user of portable information terminal 100. Alternatively, the size of display area 121c may vary depending on the number of apps recommended by the application recommendation processing or may be kept constant regardless of the number of the apps recommended by the application recommendation processing.

Obviously, in cases where the application recommendation processing results in a single app being recommended, the processing for displaying an icon correlated with such recommended app in the display area 121c of display unit 121 may be performed as the screen display control processing for displaying the single app recommended by the application recommendation processing in such a way as to help the user of portable information terminal 100 select it easily, as has been explained in embodiment 2. In the case of two or more apps being recommended by the application recommendation processing, any one is selected from among these apps, and then the processing for displaying an execution screen of the selected app in the display area 121a of display unit 121 may be performed as the screen display control processing for displaying one app selected from the apps recommended by the application recommendation processing in such a way as to help the user of portable information terminal 100 select it easily as has been explained in conjunction with embodiment 1 stated supra.

It is also acceptable to employ another configuration which makes it possible to preset whether to display in the area 121c the app(s) recommended by the application recommendation processing.

### EMBODIMENT 3

An embodiment 3 of this invention will be explained below. A configuration and advantageous effects in this embodiment also are to be the same as those of embodiment 1 unless otherwise noted. Thus, only different points between this embodiment and embodiment 1 will mainly be set forth below, and an explanation about common points will be omitted as much as possible in order to avoid duplication.

The portable information terminal 100 of this embodiment is arranged not to store various types of applications software in storage unit 110. The various apps-storing processing of portable information terminal 100 of this embodiment is performed by application server 211 in place of it; further, the processing for executing various apps in portable information terminal 100 of this embodiment is also substitutable by a process including the steps of sending prespecified data to application server 211, executing various apps based on the prespecified data in application server 211, and receiving execution results of various apps, which are sent from application server 211. Application server 211 also has the above-stated application recommendation function. With such arrangement, portable information terminal 100 is no longer required to equip the application recommending unit 160, causing storage unit 110 to decrease in capacity. Thus, it becomes possible to achieve cost reduction.

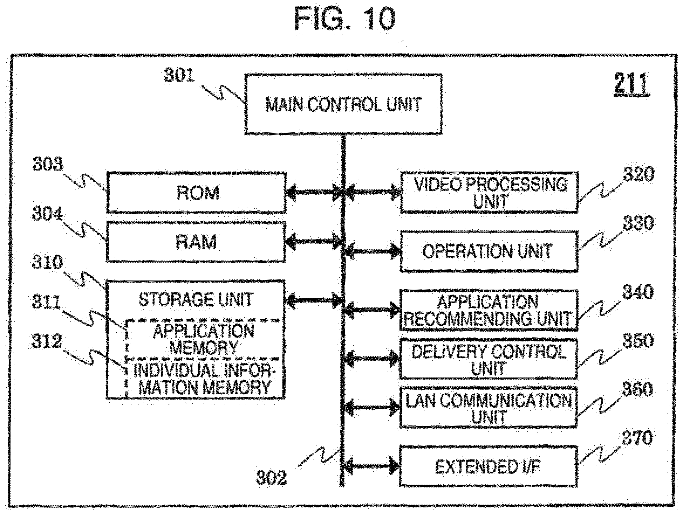

Fig. 10 is a block diagram showing one example of the application server 211 of this embodiment. The application server 211 is constituted from a main control unit 301, system bus 302, ROM 303, RAM 304, storage unit 310, video processing unit 320, operation unit 330, application recommending unit 340, delivery control unit 350, LAN communication unit 360, and extended interface 370.

The main control unit 301 is a microprocessor unit which controls an entirety of the application server 211 in accordance with a prespecified program(s). System bus 302 is a data communication path for performing data transmission/reception between main control unit 301 and each part within application server 211. ROM 303 is a memory storing a basic operation program or else of application server 211. RAM 304 is for use as a work area during execution of the basic operation program and various types of apps. ROM 303 and RAM 304 may be arranged to have an integral configuration with main control unit 301.

The storage unit 310 is configured from an application memory region 311 and individual information memory region 312. The application memory region 311 performs storing of various types of applications software for use on the portable information terminal of this embodiment. The individual information memory region 312 stores identification information capable of identifying the portable information terminal and individual information indicating which one of various apps stored in application memory region 311 is usable by each portable information terminal which is identified by the identification information. The individual information may be designed to further include information on the screen layout in display unit 121 of each portable information terminal identified by the identification information and an app usage history or else of each portable information terminal identified by the identification information.

The portable information terminal 100 of this embodiment sends to application server 211 the identification information owned by portable information terminal 100, and refers to the individual information stored in individual information memory region 312 based on such identification information, thereby becoming able to acquire the information on the screen layout of a display screen to be displayed at display unit 121 of portable information terminal 100 and the information indicating which one of various apps stored in application memory region 311 is usable. The image information of icons correlated with various apps to be displayed at the display unit 121 of portable information terminal 100 may also be acquired from the information of various apps stored in application memory region 311. Note that the individual information stored in individual information memory region 312 is arranged so that its storage content is updatable when the user of portable information terminal 100 changed the usage registration of various apps (including billing/accounting processing or the like) by using portable information terminal 100.

The video processing unit 320 is constituted from a video display unit and video signal processing unit, which are not shown in the drawing, for displaying at the above-stated video display unit a video signal of an operative condition or else of application server 211 which was processed by the video signal processing unit, thereby providing it to an administrator of application server 211. The operation unit 330 is an instruction input unit which performs inputting of operation instructions with respect to application server 211; in this embodiment, it consists of a keyboard, mouse, etc.

The application recommending unit 340 performs application recommendation processing for using information about a present location of portable information terminal 100 and/or information on a present time point as sent from portable information terminal 100 or other information to estimate and recommend an app which seems to be willingly used by the user of portable information terminal 100. In this embodiment also, the application recommending unit 340 may be arranged not to have the independent configuration shown in Fig. 10; instead, the same function may be achieved by causing main control unit 301 to execute predetermined application software while letting RAM 304 be a work area therefor.

The delivery control unit 350 performs control for determining which one of portable information terminals is specified as a destination of delivery data, such as execution results of the above-stated app and various app programs stored in application memory region 311, image information of an icon correlated with the app, a result of application recommendation processing at application recommending unit 340, etc. LAN communication unit 360 is connected to the Internet 201 by a wired or wireless line, for performing data transmission/reception. LAN communication unit 360 is connected by wire or wirelessly to the Internet 201, for performing data transmission/reception. The extended interface unit 370 is a group of interface modules for extending the function of application server 211.

Although the application server 211 shown in Fig. 10 also includes a number of components which are not essential to this embodiment, the effects of this embodiment will not be impaired even in the case of configurations that do not equip them. Configurations not shown in the drawing may be further added thereto.

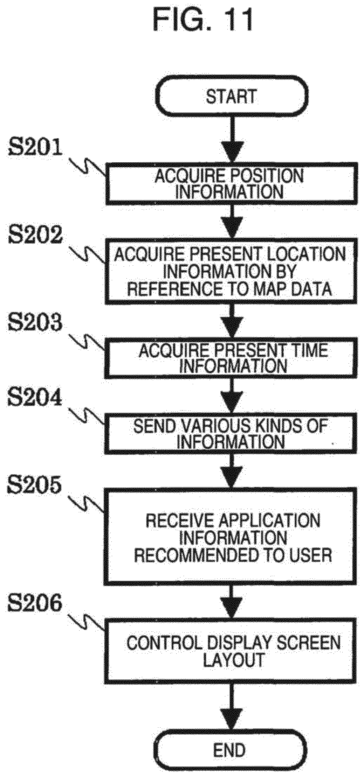

The application recommendation processing and screen display control processing in the portable information terminal 100 of this embodiment are executed in accordance with a flowchart of Fig. 11.

In the portable information terminal 100 of this embodiment, GPS reception unit 151 first receives electric wave from GPS satellite in response to an application recommendation processing execution command issued by main control unit 101, thereby acquiring position information (at step S201). Next, main control unit 101 acquires present location information by reference to map data using the position information acquired by the processing of S201 (S202). Further, main control unit 101 acquires present time information (S203). Note that the processing operations at S201-S203 are the same as those of the embodiment stated above; so, detailed explanations thereof are omitted herein.

Next, the main control unit 101 sends an application recommendation request signal, along with the present location information and present time information acquired by the processing at S202 and S203, to application server 211 via LAN communication unit 141 (or mobile telephone network communication unit 142) and Internet 201 (S204).

The application server 211 which received the application recommendation request signal and the present location information plus present time information transmitted from portable information terminal 100 executes application recommendation processing at application recommending unit 340. This application recommendation processing may be the same as the processing performed at the application recommending unit 160 of embodiment 1. In such application recommendation processing, when an app to be recommended to the user of portable information terminal 100 is found, main control unit 301 sends to portable information terminal 100 the information on the app to be recommended. The portable information terminal 100 receives the information on the app to be recommended, which was sent from application server 211 (S205).

Note that in the processing of S204, portable information terminal 100 may be arranged to send only the application recommendation request signal to application server 211; if this is the case, application server 211 performs, in response to the application recommendation request signal, the application recommendation processing based on only the app usage history of portable information terminal 100, which is contained in the individual information stored in individual information memory region 312.

In the processing of S205, upon receipt of the information on the app to be recommended to the user of portable information terminal 100, the main control unit 101 next performs the screen display control processing for controlling the layout of the display area of display unit 121 (S206).

Note that in this embodiment, the aforesaid information on the app to be recommended is either the image information of an execution screen obtained by execution of such app to be recommended or the image information of an icon correlated with the to-be-recommended app. In case the information on the to-be-recommended app which was received in the processing of S206 is the image information of an execution screen obtained by executing the to-be-recommended app, processing may be performed which is the same as the screen display control processing explained in the above-stated embodiment 1. On the other hand, in case the information on the to-be-recommended app which was received in the processing of S206 is the image information of an icon correlated with the to-be-recommended app, the processing that is the same as the screen display control processing explained in the above-stated embodiment 2 may be performed.

As has been stated above, in the portable information terminal 100 of this embodiment also, it becomes possible by performing the series of processing operations shown in Fig. 11 to simultaneously display the icon correlated with the app which was recommended based on the portable information terminal 100's present location information and other information and which seems to be willingly used by the user of portable information terminal 100 and those icons correlated with high use-frequency apps disposed by the user of portable information terminal 100 according to his or her preference (or data created by respective apps). In the portable information terminal 100 of this embodiment, it is also possible to reduce its production cost when compared to the portable information terminal of either embodiment 1 or embodiment 2.

Although examples of the implementation form of this invention have been set forth using embodiments 1 to 3, it is needless to say that the configuration for achieving the technique of this invention should not be limited to the aforesaid embodiments. For example, the configuration of one embodiment and that of another embodiment may be combined together. These are all those belonging to the category of this invention. Additionally, numerical values and messages appearing in the text and drawings are also mere examples, and the use of different ones does not spoil the effects of this invention.

Note that the above-stated functions of this invention are such that some or all of them may be realized by hardware designed using integrated circuitry for example. It may alternatively be realized by software, which is executable by a microprocessor unit or else through interpretation of programs for achieving respective functions. Although these programs may be prestored in ROM 103 or storage unit 110 of portable information terminal 100, it is also permissible to obtain them from the application server 211 on Internet 201 via LAN communication unit 141 or mobile telephone network communication unit 142. Alternatively, the programs may be stored in a memory card or the like and acquired through the extended interface unit 170 where necessary.

Also note that control lines and data lines shown in the drawings are intended to indicate those deemed necessary for explanation purposes; these do not always indicate all control lines and data lines used in actual products. In reality, it may be considered that almost all configurations are interconnected.

### REFERENCE SIGNS LIST

100: Portable Information Terminal, 101: Main Control Unit, 102: System Bus, 103: ROM, 104: RAM, 110: Storage Unit, 111: Display Layout Memory Region, 112: Operation History Memory Region, 113: Schedule Memory Region, 114: Other-Information Memory Region, 120: Video Processing Unit, 121: Video Display Unit, 122: Video Signal Processing Unit, 123: Video Input Unit, 125: Audio Processing Unit, 126: Audio Output Unit, 127: Audio Signal Processing Unit, 128: Audio Input Unit, 130: Operation Unit, 130h: Home Key, 130t: Touch Panel, 140: Communication Processing Unit, 141: LAN Communication Unit, 142: Mobile Phone Network Communication Unit, 143: Proximity Wireless Communication Unit, 150: Sensor Unit, 151: GPS Reception Unit, 152: Acceleration Sensor, 153: Gyro Sensor, 154: Geomagnetic Sensor, 155: Illuminance Sensor, 156: Proximity Sensor, 160: Application Recommending Unit, 170: Extended Interface Unit, 211: Application Server, 301: Main Control Unit, 302: System Bus, 303: ROM, 304: RAM, 310: Storage Unit, 311: Application Memory Region, 312: Individual Information Memory Region, 320: Video Processing Unit, 330: Operation Unit, 340: Application Recommending Unit, 350: Delivery Control Unit, 360: LAN Communication Unit, 370: Extended Interface.

## Claims

1. A portable information terminal (100) having an application software recommendation function, comprising:
storage means (103, 110) for storing application software;
application recommendation means (160) for performing recommendation of application software to a user of said portable information terminal;
display means (121) for displaying at least an application execution screen (a01) obtained by execution of application software stored in said storage means, icons (i) correlated with the application software stored in said storage means and icons for downloading application software not stored in said storage means from an outer server; and
control means (101) for controlling the application execution screen, icons correlated with the application software stored in said storage means and icons for downloading application software not stored in said storage means, of the display means, based on a recommendation result of said application recommendation means, wherein
said display means is configured to display, while the portable device is in a standby state, a basic screen layout with icons correlated with applications stored in the portable information terminal;
said display means is configured to display, in response to a recommendation result of said application recommendation means, when application software recommended by said application recommendation means is stored in said storage means, an application execution screen obtained by execution of the application software recommended by said application recommendation means or icons correlated with the recommended application software; and
said display means is configured to display, in response to a recommendation result of said application recommendation means, when application software recommended by said application recommendation means is not stored in said storage means, icons for downloading the not stored application software from an outer server (211); and wherein
said application execution screen of the recommended application or said icons correlated with the recommended application software are displayed in a first part (121a) of said basic screen layout simultaneously with the icons of a second part (121b) of said basic screen layout.

2. The portable information terminal according to claim 1, further comprising at least one of present location information acquisition means (151) for acquiring present location information and present time information acquisition means for acquiring present time information, wherein
said application recommendation means performs recommendation of application software to the user of said portable information terminal based on at least the present location information acquired by said present location information acquisition means and/or the present time information acquired by said present time information acquisition means.

3. The portable information terminal according to claim 1 or 2, wherein
said display means is able to display, at a predetermined area (121a, b, c), the icons correlated with the recommended application software when application software recommended by said application recommendation means is stored in said storage means or the icons for downloading the not stored application software from an outer server when application software recommended by said application recommendation means is not stored in said storage means.

4. The portable information terminal according to any one of claims 1 to 3, wherein said application recommendation means is possible to be set whether to execute recommendation of application software.

5. The portable information terminal according to any one of claims 1 to 3, wherein the processing in said application recommendation means for performing recommendation of application software to the user of portable information terminal is started with any one of timings as its trigger, said timings including a timing at which said portable information terminal makes a transit from a power-off state to a power-on state, a timing at which a sleep state of said portable
information terminal is released, a timing at which a prespecified operation key equipped by said portable information terminal is operated, a timing at which application software is executed for performing the recommendation of application software, and a timing which complies with a certain schedule previously defined by the user of said portable information terminal.

## Patentansprüche

1. Tragbares Informationsendgerät (100) mit einer Anwendungssoftware-Empfehlungsfunktion, umfassend:
Speichermittel (103, 110) zum Speichern von Anwendungssoftware;
Anwendungsempfehlungsmittel (160) zum Durchführen einer Empfehlung von Anwendungssoftware an einen Benutzer des tragbaren Informationsendgeräts;
Anzeigemittel (121) zum Anzeigen zumindest eines Anwendungsausführungsbildschirms (a01), der durch Ausführen von Anwendungssoftware erhalten wird, die in dem Speichermittel gespeichert ist, von Icons (i), die mit der Anwendungssoftware, die in dem Speichermittel gespeichert ist, in Korrelation stehen, und von Icons zum Herunterladen von Anwendungssoftware, die nicht in dem Speichermittel gespeichert ist, von einem externen Server; und
Steuermittel (101) zum Steuern des Anwendungsausführungsbildschirms, von Icons, die mit der Anwendungssoftware, die in dem Speichermittel gespeichert ist, in Korrelation stehen und von Icons zum Herunterladen von Anwendungssoftware, die nicht in dem Speichermittel gespeichert ist, von dem Anzeigemittel auf Basis eines Empfehlungsergebnisses des Anwendungsempfehlungsmittels, wobei
das Anzeigemittel konfiguriert ist, um ein grundlegendes Bildschirmlayout mit Icons, die mit Anwendungen in Korrelation stehen, die im tragbaren Informationsendgerät gespeichert sind, anzuzeigen, während sich das tragbare Endgerät in einem Standby-Zustand befindet;
das Anzeigemittel konfiguriert ist, um als Antwort auf ein Empfehlungsergebnis des Anwendungsempfehlungsmittels, wenn durch das Anwendungsempfehlungsmittel empfohlene Anwendungssoftware in dem Speichermittel gespeichert ist, einen Anwendungsausführungsbildschirm anzuzeigen, der durch Ausführen der Anwendungssoftware, die durch das Anwendungsempfehlungsmittel empfohlen wird, oder von Icons, die mit der empfohlenen Anwendungssoftware in Korrelation stehen, erhalten wird; und
das Anzeigemittel konfiguriert ist, um als Antwort auf ein Empfehlungsergebnis des Anwendungsempfehlungsmittels, wenn durch das Anwendungsempfehlungsmittel empfohlene Anwendungssoftware nicht in dem Speichermittel gespeichert ist, Icons zum Herunterladen der nicht gespeicherten Anwendungssoftware von einem externen Server (211) anzuzeigen; und wobei
der Anwendungsausführungsbildschirm der empfohlenen Anwendung oder der Icons, die mit der empfohlenen Anwendungssoftware in Korrelation stehen, in einem ersten Teil (121a) des grundlegenden Bildschirmlayouts gleichzeitig mit den Icons eines zweiten Teils (121b) des grundlegenden Bildschirmlayouts angezeigt werden.

2. Tragbares Informationsendgerät nach Anspruch 1, ferner umfassend zumindest eines aus einem aktuellen Standortinformationserfassungsmittel (151) zum Erfassen aktueller Standortinformationen und einem aktuellen Zeitinformationserfassungsmittel zum Erfassen von aktuellen Zeitinformationen, wobei
das Anwendungsempfehlungsmittel eine Empfehlung von Anwendungssoftware an den Benutzer des tragbaren Informationsendgeräts auf Basis zumindest der aktuellen Standortinformationen, die durch das aktuelle Positionsinformationsmittel erfasst werden, und/oder der aktuellen Zeitinformationen, die durch das aktuelle Zeitinformationserfassungsmittel erfasst werden, durchführt.

3. Tragbares Informationsendgerät nach Anspruch 1 oder 2, wobei
das Anzeigemittel in der Lage ist, in einem vorbestimmten Bereich (121a, b, c) die Icons, die mit der empfohlenen Anwendungssoftware in Korrelation stehen, anzuzeigen, wenn durch das Anwendungsempfehlungsmittel empfohlene Anwendungssoftware in dem Speichermittel gespeichert ist, oder die Icons zum Herunterladen der nicht gespeicherten Anwendungssoftware von einem externen Server anzuzeigen, wenn durch das Anwendungsempfehlungsmittel empfohlene Anwendungssoftware nicht in dem Speichermittel gespeichert ist.

4. Tragbares Informationsendgerät nach einem der Ansprüche 1 bis 3, wobei das Anwendungsempfehlungsmittel eingestellt werden kann, um eine Empfehlung von Anwendungssoftware durchzuführen oder nicht durchzuführen.

5. Tragbares Informationsendgerät nach einem der Ansprüche 1 bis 3, wobei die Verarbeitung im Anwendungsempfehlungsmittel zum Durchführen einer Empfehlung von Anwendungssoftware an den Benutzer des tragbaren Informationsendgeräts mit einem beliebigen von Zeitpunkten als Auslöser gestartet wird, wobei die Zeitpunkte einen Zeitpunkt, zu dem das tragbare Informationsendgerät einen Übergang von einem ausgeschalteten Zustand in einen eingeschalteten Zustand vollzieht, einen Zeitpunkt, zu dem ein Ruhezustand des tragbaren Informationsendgeräts aufgehoben wird, einen Zeitpunkt, zu dem eine zuvor spezifizierte Bedientaste, mit der das tragbare Informationsendgerät ausgestattet ist, bedient wird, einen Zeitpunkt, zu dem Anwendungssoftware zum Durchführen der Empfehlung von Anwendungssoftware ausgeführt wird, und einen Zeitpunkt, der einem bestimmten Zeitplan entspricht, der zuvor von dem Benutzer des tragbaren Informationsendgeräts definiert wurde, umfassen.

## Revendications

1. Terminal d'information portatif (100) ayant une fonction de recommandation de logiciel d'application, comprenant :
un moyen de stockage (103, 110) pour stocker un logiciel d'application ;
un moyen de recommandation d'application (160) pour effectuer une recommandation de logiciel d'application à un utilisateur dudit terminal d'information portatif ;
un moyen d'affichage (121) pour afficher au moins un écran d'exécution d'application (a01) obtenu par exécution d'un logiciel d'application stocké dans ledit moyen de stockage, des icônes (i) mises en corrélation avec le logiciel d'application stocké dans ledit moyen de stockage et des icônes pour télécharger un logiciel d'application non stocké dans ledit moyen de stockage depuis un serveur externe ; et
un moyen de commande (101) pour commander l'écran d'exécution d'application, des icônes mises en corrélation avec le logiciel d'application stocké dans ledit moyen de stockage et des icônes pour télécharger un logiciel d'application non stocké dans ledit moyen de stockage, du moyen d'affichage, sur la base d'un résultat de recommandation dudit moyen de recommandation d'application, dans lequel
ledit moyen d'affichage est configuré pour afficher, pendant que le dispositif portatif est dans un état de veille, une disposition d'écran de base avec des icônes mises en corrélation avec des applications stockées dans le terminal d'information portatif ;
ledit moyen d'affichage est configuré pour afficher, en réponse à un résultat de recommandation dudit moyen de recommandation d'application, lorsque le logiciel d'application recommandé par ledit moyen de recommandation d'application est stocké dans ledit moyen de stockage, un écran d'exécution d'application obtenu par exécution du logiciel d'application recommandé par ledit moyen de recommandation d'application ou des icônes mises en corrélation avec le logiciel d'application recommandé ; et
ledit moyen d'affichage est configuré pour afficher, en réponse à un résultat de recommandation dudit moyen de recommandation d'application, lorsque le logiciel d'application recommandé par ledit moyen de recommandation d'application n'est pas stocké dans ledit moyen de stockage, des icônes pour télécharger le logiciel d'application non stocké à partir d'un serveur externe (211) ; et où
ledit écran d'exécution d'application de l'application recommandée ou lesdites icônes mises en corrélation avec le logiciel d'application recommandé sont affichés dans une première partie (121a) de ladite disposition d'écran de base simultanément avec les icônes d'une seconde partie (121b) de ladite disposition d'écran de base.

2. Terminal d'information portatif selon la revendication 1, comprenant en outre au moins l'un d'un moyen d'acquisition d'informations de position actuelle (151) pour acquérir des informations de localisation actuelle et d'un moyens d'acquisition d'informations de temps présent pour acquérir des informations de temps présent, dans lequel
ledit moyen de recommandation d'application effectue une recommandation du logiciel d'application à l'utilisateur dudit terminal d'information portatif sur la base d'au moins les informations de localisation actuelle acquises par ledit moyen d'acquisition d'informations de localisation actuelle et/ou les informations de temps présent acquises par ledit moyen d'acquisition d'informations de temps présent.

3. Terminal d'information portatif selon la revendication 1 ou 2, dans lequel
ledit moyen d'affichage peut afficher, dans une zone prédéterminée (121a, b, c), les icônes mises en corrélation avec le logiciel d'application recommandé lorsqu'un logiciel d'application recommandé par ledit moyen de recommandation d'application est stocké dans ledit moyen de stockage ou les icônes pour télécharger le logiciel d'application non stocké à partir d'un serveur externe lorsque le logiciel d'application recommandé par ledit moyen de recommandation d'application n'est pas stocké dans ledit moyen de stockage.

4. Terminal d'information portatif selon l'une quelconque des revendications 1 à 3, dans lequel ledit moyen de recommandation d'application peut être réglé pour exécuter ou non une recommandation du logiciel d'application.

5. Terminal d'information portatif selon l'une quelconque des revendications 1 à 3, dans lequel le traitement dans ledit moyen de recommandation d'application pour effectuer une recommandation de logiciel d'application à l'utilisateur du terminal d'information portatif est démarré avec l'un quelconque de moments en tant que son déclencheur, lesdits moments comprenant un moment auquel ledit terminal d'information portatif effectue une transition d'un état hors tension à un état sous tension, un moment auquel un état de veille dudit terminal d'information portatif est libéré, un moment auquel une touche de fonctionnement spécifiée préalablement fournie par ledit portatif le terminal d'information est actionnée, un moment auquel un logiciel d'application est exécuté pour exécuter la recommandation du logiciel d'application, et un moment qui est conforme à un certain calendrier préalablement défini par l'utilisateur dudit terminal d'information portatif.
